# FASCICULE DE BREVET EUROPEEN

(11) **EP 2 500 706 B1**
(45) Date de publication et mention de la délivrance du brevet: **27.07.2016**
(21) Numéro de dépôt: 12159385.9
(22) Date de dépôt: 14.03.2012
(51) Int. Cl.: G01M 7/08, G01N 3/30, G01L 5/00, G01M 5/00, B64C 1/00, B64D 45/00

(54) **Dispositif de détection de chocs sur une structure**
Vorrichtung zur Erfassung von Stößen, die auf eine Struktur einwirken
Device for detecting impacts on a structure

(30) Priorité: 17.03.2011 FR 1152217
(43) Date de publication de la demande: 19.09.2012
(73) Titulaire: Airbus Operations (S.A.S.), 31060 Toulouse (FR)
(72) Inventeur: Dobost, Jérôme, 31880 LA SALVETAT SAINT GILLES (FR)
(74) Mandataire: Gicquel, Olivier Yves Gérard

(56) Documents cités:
- WO-A1-2009/019511
- US-A- 5 520 055
- US-B1- 7 032 457

## Description

La présente invention appartient au domaine du contrôle des structures.

Plus particulièrement l'invention concerne un dispositif permettant de détecter lors d'une inspection visuelle l'occurrence d'un choc sur une structure et encore plus particulièrement un dispositif permettant d'évaluer lors de cette inspection visuelle l'énergie mise en jeu dans le choc.

Dans les structures dont l'intégrité de certaines pièces doit être garantie en service, par exemple dans des pièces de structure d'aéronef, les pièces sensibles, au moins pour leurs parties critiques et vulnérables, ne doivent pas subir de chocs susceptibles de les endommager et qui auraient pour effet de diminuer leurs caractéristiques mécaniques à plus ou moins long terme.

En particulier certaines parties de pièces qui seront non visibles et protégées lorsque la structure sera en service, apparaissent vulnérables au cours de la fabrication par exemple en raison d'une possibilité de chute d'un outil ou d'une personne pouvant accidentellement mettre un pied sur une zone vulnérable.

Ce problème doit être pris en compte dans le cas des matériaux composites comportant un empilage de plis adhérant entre eux par une résine et pour lesquels un choc peut conduire à un décollement de plis à l'intérieur du matériau, un délaminage local, qui n'est pas visible extérieurement et nécessite la mise en oeuvre de moyens de contrôle de la structure interne du matériau pour être détecté et caractérisé.

Une première méthode connue pour garantir l'intégrité des pièces consiste à protéger les pièces, de manière temporaire ou définitive, par des dispositifs capables d'absorber l'énergie, dans certaines limites, lors d'un choc. De nombreux dispositifs le plus souvent adapté à des situations particulières utilisent ainsi des matériaux en élastomère formant matelas ou des panneaux de protections métalliques ou en bois qui recouvrent temporairement ou durablement la zone et les éléments à protéger.

Dans certaines situations la masse ou les dimensions de tels dispositifs de protections rendent difficile leur utilisation.

Une autre méthode connue consiste à préparer les pièces de sorte à assurer qu'un choc s'étant produit, l'événement sera détecté a posteriori lors d'une inspection.

Ainsi certaines méthodes mettent en oeuvre des pièces rapportées dans les zones à risque destinées à être endommagées en absorbant l'énergie d'un choc pour protéger la structure et fixées sur la structure afin de pouvoir être remplacées en cas de besoins. De telles pièces dites sacrificielles du fait qu'elles sont destinées à être sacrifiées pour protéger une autre pièce présentent le défaut de devoir être adaptée à chaque modèle de pièce à protéger ce qui en limite en pratique l'usage à des cas où un risque précis a été identifié.

Il est connu par exemple de protéger les sommets des raidisseurs de panneaux de structure en plaçant sur la crête de ceux-ci des éléments enveloppants le raidisseur comme il est décrit dans la demande de brevet FR2932707. En cas de choc l'élément enveloppant est endommagé en protégeant le raidisseur et peut être remplacé. Dans ce cas, lorsqu'il est nécessaire de retirer l'élément endommagé, des précautions doivent être prise pour ne pas risquer d'endommager à son tour la structure protégée.

D'autres méthodes ont pour seul but de détecter qu'un choc s'est effectivement produit sur une pièce en matérialisant l'emplacement de l'impact. Pour cela il est par exemple proposé dans le brevet GB 2 194 062 d'utiliser des peintures incorporant des microcapsules d'un produit colorant, non visible à l'état encapsulé, mais qui devient observable dans le domaine visible lorsque le colorant s'est trouvé libéré suite à choc ayant brisé localement des microcapsules en donnant une bonne appréciation de l'étendue de la zone impactée.

Un inconvénient de cette méthode est qu'il est difficile dans ce cas d'évaluer l'énergie de l'impact, et donc l'importance du risque d'endommagement, et pour cela il est en pratique nécessaire par précaution d'inspecter de manière détaillée la zone impactée, zone pour laquelle la peinture ne procure par ailleurs aucune protection mécanique contre les chocs.

En outre de telles peintures sont coûteuses, plus sensibles à l'abrasion que des peintures conventionnelles et s'il n'est pas pris la précaution de repeindre une zone impactée ou réparée avec une peinture de ce type, la détection des chocs n'est plus assurée.

Le présent dispositif de l'invention pour détecter l'occurrence de chocs sur une structure apporte une solution qui combine des avantages des différentes méthodes et dispositifs connus pour détecter les chocs sans inconvénient rédhibitoire quand à la mise en oeuvre du dispositif.

Le dispositif de l'invention permet de visualiser, sans moyen particulier de mesure, a posteriori, qu'un choc a effectivement eu lieu tout en localisant précisément l'emplacement du choc et son étendue, en permettant d'évaluer l'énergie mise en jeu dans le choc et, dans une certaine mesure, en permettant d'identifier le type ou au moins la taille de l'objet ayant provoqué le choc sur la pièce.

Le dispositif de détection de chocs sur une pièce suivant l'invention est une structure inerte agencée de telle sorte qu'un choc provoque un changement d'état rémanent et observable visuellement de parties du dispositif de détection.

Le dispositif de détection comporte :
- une base destinée à être fixée par une face inférieure sur une surface de la pièce où l'occurrence d'un choc doit être détectée et,
- au moins un détecteur fixé à la base du côté d'une face supérieure opposée de la base, le au moins un détecteur consistant en un élément de la structure du dispositif de détection saillant par rapport à la face supérieure de la base,
la résistance mécanique du au moins un détecteur, définie par ses dimensions géométriques et par le matériau le constituant, étant déterminée pour que le au moins détecteur subisse une déformation rémanente d'amplitude égale ou supérieure à une amplitude seuil **As** choisie lorsque le au moins un détecteur est soumis au choc d'un objet d'une énergie égale ou supérieure à une énergie seuil **Es** choisie.

Ainsi en choisissant une amplitude seuil **As** d'une grandeur suffisante pour être observable visuellement sans instrumentation particulière, un choc devient détectable par une inspection visuelle des dispositifs de détection dès lors que son énergie aura atteinte ou dépassée la valeur de l'énergie seuil **Es,** même si la pièce ne montre pas d'endommagement à l'examen visuel, et si le choc à été d'une énergie plus faible, il ne sera pas détecté en raison des déformations de faible amplitude, inférieures à l'amplitude seuil **As,** qu'il aura pu générer.

Dans une forme de réalisation, un détecteur est constitué d'un matériau ductile apte à être déformé de manière plastique en tout ou partie sous l'effet d'un choc d'une énergie supérieure à une valeur prédéterminée. Par matériau ductile, on entend un matériau capable de se déformer plastiquement sans se rompre. Dans cette forme, la déformation observable correspond à la déformation plastique du détecteur dont aucune partie ne se détache de la base.

Avantageusement l'amplitude seuil est choisie entre 1 et 5 mm pour être observable par inspection visuelle.

Dans une autre forme de réalisation, un détecteur est constitué d'un matériau fragile, apte à être déformé à rupture en tout ou partie lorsqu'il est impacté sous l'effet d'un choc d'énergie supérieure à une valeur prédéterminée. Par matériau fragile, on entend un matériau qui se casse dans le domaine élastique. Dans cette forme de réalisation, la déformation observable correspond à la constatation du bris du détecteur.

Un détecteur est formé, dans une forme de réalisation, principalement par un voile sensiblement perpendiculaire à la face supérieure de la base sur laquelle il est fixé, d'une hauteur **hd** et d'une épaisseur **ed** petites par rapport à une longueur parallèle à la face supérieure de la base. Cette forme de réalisation est en particulier adaptée à la fabrication du dispositif de détection par extrusion du matériau formant le détecteur au travers d'une filière de section adaptée.

Un détecteur a, dans une autre forme de réalisation, une forme de picot, saillant d'une hauteur **hd** par rapport à la face supérieure de la base, permettant en particulier de diminuer la masse du dispositif de détection.

Le dispositif de détection est susceptible d'avoir en outre les caractéristiques suivantes prises seules ou en toutes combinaisons techniquement opérantes :
- la base comporte des évidements en dehors de zones de fixation de détecteurs à la base ;
- un détecteur est en matériau métallique ;
- un détecteur est en matériau polymère ;
- la face inférieure de la base comporte un adhésif de fixation sur une surface d'une pièce ;
- le dispositif de détection comporte une pluralité de détecteurs répartis sur la base, les distances d entre détecteurs déterminant une dimension caractéristique minimale d'un objet impactant devant être détecté ;
- la base est formée dans un matériau ductile apte à être déformé pour épouser la forme de la surface dite sensible d'une pièce sur laquelle le dispositif de détection est destiné à être fixé ;
- des faces des détecteurs et ou de la face supérieure de la base sont teintées pour augmenter le contraste visuel entre les détecteurs et la base ou entre des faces différentes d'un détecteur ;
- la base est réalisée dans un matériau et avec une épaisseur **eb** déterminés pour que le dispositif de détection assure une protection mécanique de la pièce sur laquelle il est destiné à être fixé vis à vis de chocs d'énergie inférieure à l'énergie seuil **Es** des chocs devant être détectés.

L'invention concerne également une pièce comportant un dispositif de détection suivant l'invention de sorte qu'un impact sur la pièce est détecté par une inspection visuelle.

Les effets et bénéfices de ces caractéristiques seront mieux compris à la lumière de la description détaillée d'exemples de modes de réalisation de dispositifs de détection suivant l'invention faite en référence aux figures qui illustrent de manière non limitative :
- figure 1: une vue générale en perspective d'un premier exemple de dispositif de détection de chocs suivant l'invention en position sur une partie sensible d'une pièce ;
- figure 2: une section d'un dispositif de détection de chocs similaire au dispositif de la figure 1 en position sur une pièce ;
- figure 3: une photographie d'un dispositif de détection de chocs similaire à celui représenté sur la figure 2 et ayant subi à titre expérimental deux chocs ;
- figure 4: une vue en perspective d'un mode de réalisation d'un dispositif de détection de chocs suivant l'invention à masse réduite.

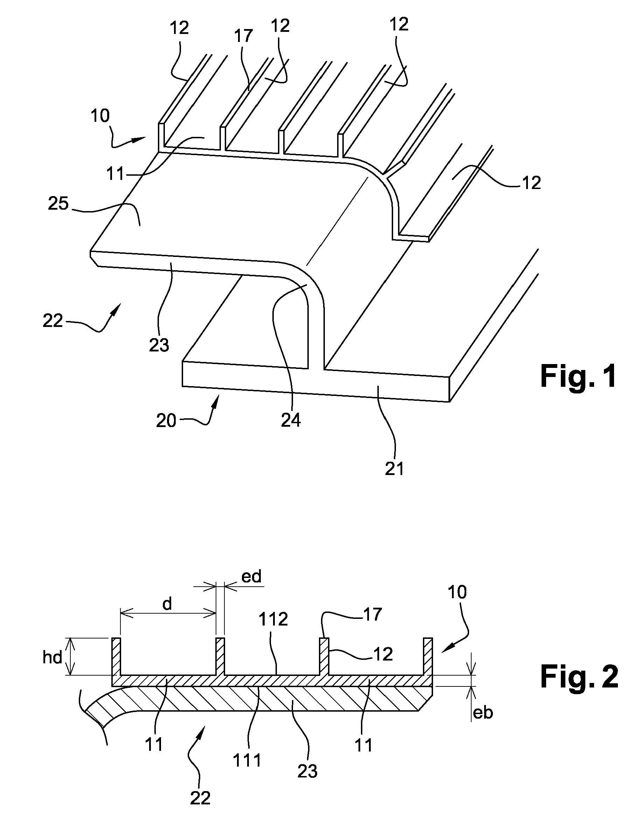

La figure 1 illustre un premier exemple de dispositif suivant l'invention.

Sur cette figure est illustrée une pièce de structure 20, laquelle pièce comporte une partie dite sensible 22. Cette partie sensible, ici à titre d'illustration un raidisseur d'un revêtement de panneau 21, comporte un voile 23 et une zone cintrée 24 entre le voile 23 et le revêtement de panneau 21.

La partie sensible 22 de la pièce 20 est recouverte au niveau de surfaces dites sensibles 25, considérées comme pouvant être soumises à des chocs, ici une face exposée du raidisseur, voile et zone cintrée non protégés par le revêtement de panneau, par un dispositif de détection 10.

Le dispositif de détection 10 est rapporté sur les surfaces sensibles 25 sur lesquelles il est fixé, avantageusement par collage.

Le dispositif de détection 10 n'apporte pas de résistance structurale notable à la pièce 20 et forme une pièce sacrificielle dont l'endommagement n'a pas en lui-même d'effet sur la résistance de la structure dans laquelle est incorporée la pièce.

Le dispositif de détection 10 est donc une structure inerte, inerte en ce sens qu'elle n'agit pas de manière active comme le ferait par exemple un capteur qui transmettrait des données, destinée à subir le choc d'un objet impactant la pièce 20 sur la surface sensible 25 recouverte du dispositif de détection.

Le dispositif de détection 10 comporte d'une part une base 11, fixée à la pièce 20 par une face inférieure 111 de ladite base, et d'autre part au moins un détecteur 12, a priori un ensemble de détecteurs.

Un détecteur 12 consiste principalement en un élément de la structure du dispositif de détection 10, saillant par rapport à une face supérieure 112 de la base 11, opposée à la face inférieure 111, et dont la résistance mécanique est telle que, lorsque ledit détecteur est soumis à un choc et que l'énergie du choc atteint ou dépasse une énergie seuil **Es** choisie par conception du dispositif de détection, il est déformé mécaniquement de manière permanente, au moins partiellement, de sorte que la déformation rémanente conséquence du choc conserve une mémoire du choc et soit d'une amplitude suffisante pour être en mesure d'être observé lors d'une inspection visuelle alors même que l'évènement est passé et que la cause du choc n'est plus présente.

En pratique pour couvrir une zone plus ou moins étendue et assurer la détection de chocs générés par des objets de dimensions limitées, le dispositif de détection 10 comporte plusieurs détecteurs 12, comme dans l'exemple de la figure 1, agencés de manière plus ou moins régulière sur la face supérieure 112 sous la forme de voiles allongés.

Les détecteurs 12 peuvent être fixés rapportés sur la base 11 mais de préférence les détecteurs et la base sont réalisés simultanément, par exemple par moulage ou par extrusion de la matière dans laquelle ils sont réalisés.

Un choc se produisant sur un détecteur 12 peut avoir pour conséquence de briser tout ou partie du détecteur, lorsque la matière dans laquelle le détecteur a été réalisée est une matière fragile, ou peut avoir pour conséquence de déformer localement le détecteur, lorsque la matière dans laquelle le détecteur a été réalisé est une matière ductile.

Dans une forme préférée lorsqu'il est souhaité d'éviter que des parties du dispositif de détection 10 se détachent en cas de choc, par exemple en raison d'un risque que des parties détachées des détecteurs ne s'insinuent dans des zones où elles seraient difficiles à retirer, le dispositif de détection est réalisé au moyen d'une matière ductile.

Une telle matière peut par exemple être un métal, tel que de l'aluminium ou un alliage d'aluminium, ou être un polymère, comme par exemple un polycarbonate.

Un avantage également de l'utilisation d'une matière ductile, au moins pour la base 11, est que le dispositif de détection 10 peut être réalisé sous une forme standardisée, en plaques ou en rubans par exemple, qui peuvent être mis à la forme de la partie sensible 22 devant être pourvue du dispositif de détection au moment où ledit dispositif de détection est fixé sur la pièce.

Dans le cas contraire, lorsque la base est réalisée dans un matériau fragile ou peu ductile, le dispositif de détection 10 doit être réalisé à la forme voulue d'utilisation, ou à une forme compatible de la forme voulue, pour pouvoir être fixé sans que ledit dispositif de détection ne se brise lorsqu'il est fixé sur la pièce.

En pratique le choix de la matière dans laquelle sera réalisé le dispositif de détection 10 prendra en considération les contraintes qui seront imposées par le concepteur de la pièce.

La masse du dispositif de détection 10 est par exemple un critère important si ledit dispositif de détection doit rester en place lorsque la pièce 20 est en service, alors qu'elle est accessoire si ledit dispositif de détection est mis en place temporairement pendant des opérations de montage de la pièce puis retiré avant la mise en service.

Le coût, les risques de corrosion, la conductivité, l'inflammabilité, la sensibilité aux agents chimiques et d'une manière générale tous les aspects pouvant interagir avec l'environnement dans lequel pourra se trouver la pièce 20 pendant la période où elle est équipée du dispositif de détection 10 sont des éléments qui permettent à l'homme du métier de choisir la matière dans laquelle le dispositif de détection 10 est réalisé, mais également la manière dont il est fixé sur la partie sensible 22 de la pièce 20.

Avantageusement le dispositif de détection 10 est fixé par collage, par exemple au moyen d'un dépôt de colle ou au moyen d'un film adhésif, mais il peut également être fixé par l'intermédiaire de fixations réparties comme des clips ou des rivets qui, n'étant pas soumis à des contraintes fortes, peuvent être le cas échéant réalisés dans une matière plastique organique.

La forme et le nombre de détecteurs 12, plus précisément une densité surfacique ou linéique des détecteurs, ainsi que leurs caractéristiques structurelles sont fonction principalement d'une part des types de chocs dont il est souhaité détecter l'occurrence et d'autre part de caractéristiques de la partie sensible 22 elle-même de la pièce.

En référence à la figure 2 qui montre une section d'un dispositif de détection 10, du même type que celui illustré sur la figure 1, fixé sur une partie sensible 22 d'une pièce, les détecteurs 12 ont la forme de voiles sensiblement parallèles et espacés entre eux d'une distance d, chaque détecteur ayant une hauteur **hd** et une épaisseur **ed,** petite par rapport à une longueur du voile considérée parallèlement à la surface de la base 11, c'est à dire que la longueur du voile est d'au moins un ordre de grandeur supérieure à la hauteur **hd** et à l'épaisseur **ed.**

Par soucis de simplification, il est supposé ici que les conditions de détection souhaitées sont homogènes et que les paramètres **d, hd** et **ed** sont constants dans le dispositif de détection considéré.

Cependant, des dispositifs de détection dont les caractéristiques évoluent sont avantageusement mis en oeuvre lorsque des exigences différentes vis à vis des chocs devant être détectés doivent être prises en compte suivant les emplacements de la pièce concernée.

Dans le cas général, pour détecter l'impact d'un objet, c'est à dire être sûr qu'au moins un détecteur 12 sera impacté, la distance d entre les détecteurs sera choisie inférieure à la petite dimension **D** des objets susceptibles de créer le choc. En pratique la condition 2 fois d sensiblement égal à **D** s'avère suffisante pour garantir la détection des chocs vis à vis du critère de dimensions de l'objet impactant.

En outre pour qu'un choc d'une énergie donnée produise un effet détectable visuellement sur les détecteurs 12, il est nécessaire que la résistance des détecteurs, en particulier leur résistance au flambage et ou à la flexion, soit suffisamment faible pour qu'un détecteur subisse une déformation minimale recherchée sous l'effet d'un impact d'une énergie devant être détecté, c'est à dire lorsque l'énergie est égale ou supérieure à une énergie seuil **Es** choisie.

On comprend également que pour une énergie faible, c'est à dire inférieure à l'énergie seuil **Es** en dessous de laquelle il est considéré que la structure n'est pas endommagée, il est souhaitable que les détecteurs 12 ne subissent pas de déformation notable pour éviter d'engager une inspection détaillée inutile, ou pour le moins que l'observation de la déformation, son amplitude en particulier, permette une estimation de l'énergie du choc.

Dans le cas de détecteurs 12 réalisés dans un matériau ductile, le détecteur impacté est seulement déformé sans être brisé et les caractéristiques mécaniques du détecteur, dépendant du matériau utilisé et de ses dimensions géométriques, sont choisies pour qu'une amplitude de la déformation du détecteur soit égale ou supérieure à une amplitude seuil **As** choisie lorsque le détecteur est soumis à un choc d'une énergie égale ou supérieure à l'énergie seuil **Es.**

Ainsi lorsque qu'il sera observé qu'un détecteur présente une déformation d'une amplitude égale ou supérieure à l'amplitude seuil **As,** il y aura de forte probabilité que le choc ayant provoqué la déformation du détecteur avait une énergie égale ou supérieure à l'énergie seuil **Es.** Une inspection détaillée de la pièce pourra alors être effectuée pour contrôler les effets du choc sur la pièce.

A contrario, si l'amplitude d'une déformation observée est inférieure à l'amplitude seuil **As,** l'énergie du choc ayant provoqué la déformation était inférieure à l'énergie seuil **Es.**

Dans le cas de détecteurs 12 réalisés en matériau fragile, le détecteur impacté est tel que la déformation provoquée par un choc d'une énergie égale ou supérieure à l'énergie seuil **Es** a pour effet de briser le détecteur. Ce résultat est obtenu dans la conception des détecteurs en réalisant ceux-ci pour que l'amplitude seuil **As** de la déformation du détecteur, obtenue lorsque l'énergie du choc est supérieure ou égale à l'énergie seuil **Es,** corresponde à la rupture du détecteur.

Ainsi lorsque qu'il sera observé qu'un détecteur est brisé, c'est à dire qu'il a été déformé au delà de l'amplitude seuil **As,** il y aura de forte probabilité que le choc ayant provoqué la rupture du détecteur avait une énergie égale ou supérieure à l'énergie seuil **Es.** Une inspection détaillée de la pièce pourra alors être effectuée pour contrôler les effets du choc sur la pièce.

A contrario, si aucun détecteur brisé n'est observé, il en sera déduit qu'aucun choc avec une énergie supérieure à l'énergie seuil **Es** ne s'est produit.

La détermination de la résistance au flambage et ou à la flexion d'un détecteur, de ses déformations ou de sa rupture sous l'effet d'un choc, est fonction de ses dimensions, en particulier l'épaisseur **ed** et la hauteur **hd** du détecteur, et de la matière dans laquelle est réalisée le détecteur.

La relation entre ces éléments relève de calculs conventionnels dans le domaine de la résistance des matériaux.

A titre d'exemple un dispositif de détection en matériau ductile avec des détecteurs d'épaisseur **ed=** 0,5mm et de hauteur **hd=** 3mm, associés à une distance entre détecteurs **d=** 8,9mm, réalisés en polycarbonate permettent de détecter des chocs de 10 joules ou plus avec un objet impactant de 16 mm de dimension caractéristique (en pratique pour les essais le diamètre d'une sphère métallique).

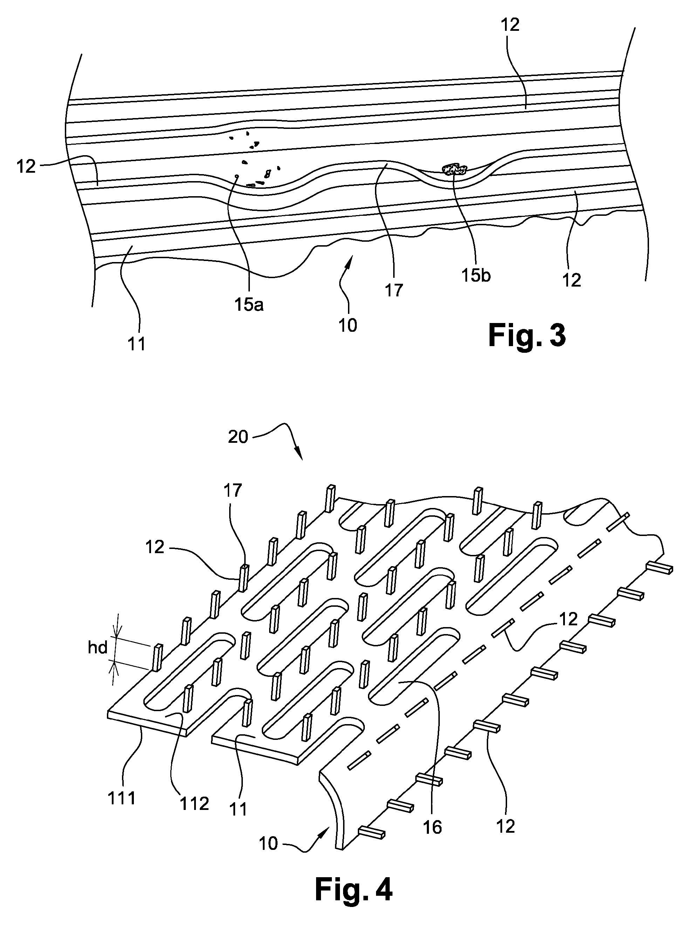

La photographie de la figure 3 donne une illustration des résultats d'essais obtenus dans cette configuration pour des chocs de 10 joules.

L'objet impactant a produit, lors de deux essais successifs, des déformations permanentes 15a et 15b d'un des détecteurs 12 du dispositif de détection, parfaitement visibles, alors que ledit objet impactant n'est plus présent.

L'amplitude des déformations est mesurable, directement sur le dispositif de détection ou par exemple sur une photographie.

Avantageusement le choix d'une valeur seuil **As** pour l'amplitude des déformations comprises entre 1 mm et 5 mm permet à un opérateur entraîné de déterminer avec une faible marge d'incertitude si l'amplitude de la déformation est égale ou supérieure à la valeur de l'amplitude seuil **As** choisie.

Une valeur différente de l'amplitude seuil **As** peut cependant être retenue en raison de conditions particulières, par exemple les dimensions du dispositif de détection ou des difficultés particulières pour réaliser une inspection visuelle de la zone concernée.

Il est bien évident que l'inspection visuelle peut être menée si besoin en utilisant des moyens d'observation qui seraient justifiés par exemple pour des conditions d'accès à la zone à inspecter sans sortir du champ de la présente invention. De tels moyens d'observations consistent par exemple en des miroirs de renvois ou périscope, des lunettes d'observation à distance, des endoscopes ... pour des observations en temps réel ou le cas échéant en des dispositifs de prise de vue, appareil photographique ou caméra ... , pour des observations en temps différé et pour archivage éventuel.

On remarque sur la photographie de la figure 3 que les déformations des détecteurs, observables sans moyens particuliers, ont fait l'objet d'une coloration contrastée d'un bord libre supérieur 17 des détecteurs qui augmente le contraste et améliore les conditions d'observation.

Ce principe est avantageusement généralisé sur les détecteurs de l'invention et l'observation des déformations est facilitée par l'utilisation de moyens de contraste, par exemple en colorant des faces latérales et la partie supérieure des voiles et éventuellement la face supérieure 112 de la base avec des teintes différentes de sorte que, en fonction des couleurs ou contrastes observés suivant les angles d'observation, les déformations des détecteurs ressortent visuellement avec un contraste augmenté.

Dans la situation présentée sur la figure 3, la structure de la pièce 20 sur laquelle est collé le dispositif de détection n'a pas subi de dégât apparent mais le dispositif de détection 10 permet de constater qu'un choc s'est produit avec une énergie d'impact supérieure au seuil fixé **Es.**

Un avantage du dispositif de détection tient au fait que le choc avec ses caractéristiques est ainsi mémorisé et qu'il pourra être constaté aussi longtemps que le dispositif de détection n'aura pas été retiré ou remplacé.

La pièce fera donc dans ce champ l'objet d'une inspection locale par des moyens de contrôle non destructifs connus (ultrasons, radiographie ...) afin de vérifier si l'impact identifié a effectivement endommagé la pièce ou non et décider des mesures à prendre, réparation ou remplacement de la pièce.

Un autre avantage du dispositif est donc également que l'inspection approfondie de la zone impactée de la pièce n'est déclenchée que lorsque l'impact a une probabilité significative d'avoir eu une énergie susceptible d'endommager la pièce et qu'un impact d'une énergie plus faible ne sera pas considéré.

Il convient de noter que le dispositif de détection joue également, dans une certaine mesure en recouvrant la partie sensible de la pièce, un rôle de protection de la pièce 20 qui peut être renforcé le cas échéant en réalisant, en fonction du niveau de protection recherché, un dispositif de détection 10 avec une base 11 d'épaisseur **eb** plus ou moins importante et fixée à la structure par des moyens également plus ou moins protecteurs de la pièce, par exemple un film adhésif épais amortissant. Avantageusement lorsque cette fonction du dispositif de détection 10 sera recherchée, la base 11 sera calculée pour que la pièce soit protégée de chocs ayant une énergie inférieure à l'énergie seuil **Es** choisie.

La forme du dispositif de détection décrite en détail n'est qu'un exemple de réalisation et le dispositif de détection 10 peut prendre des formes variées dans lesquelles les détecteurs 12 consistent en des éléments de structure en saillies par rapport à la face supérieure 112 d'une base 11, lesquels éléments de structure subissent une déformation permanente, plastique ou par brisure, lorsque qu'ils subissent un choc d'une énergie égale ou supérieure à un seuil choisi **Es.**

La figure 4 illustre un exemple de dispositif de détection 10 dans lequel les détecteurs 12 présentent la forme de picots saillants de sections cylindriques, dans un plan parallèle à la base 11, sensiblement carrées ou légèrement rectangulaires, et dans lequel en outre la base 11 est partiellement évidée par des évidements 16, débouchants ou non.

Ces deux caractéristiques, regroupées dans ce mode de réalisation d'un dispositif de détection mais en pratique indépendantes, ont pour effet de diminuer la masse du dispositif de détection 10, par rapport au mode de réalisation illustré sur la figure 1.

Les picots, d'une hauteur **hd,** sont dans ce cas agencés en lignes espacées de la distance d et ils sont espacés sur une même ligne d'une distance pouvant être différente mais dans la pratique sensiblement équivalente de sorte à respecter dans toutes les directions à la surface du dispositif de détection les conditions nécessaires à la détection d'objets impactant ayant une dimension minimale donnée.

D'autres formes sont bien sûr possibles pour les détecteurs en picots comme des sections circulaires ou autres ainsi que des formes coniques par exemple.

Dans cette forme de réalisation des détecteurs en picots, le contraste visuel des déformations des détecteurs peut également être augmenté par des colorations des surfaces de parties du dispositif de détection pour faciliter l'inspection visuelle. Par exemple le bord libre supérieur 17 d'un picot, c'est à dire le sommet du picot, et éventuellement des faces latérales du picot, peuvent être d'une couleur contrastée par rapport à la face supérieure 112 de la base. Ainsi une déformation du picot qui se traduit par un déplacement apparent de son bord libre supérieur 17 par rapport à la base 11 sera observable plus simplement.

Lorsque le détecteur doit se briser sous l'effet d'un choc, le dispositif de détection sera de préférence coloré sur pour faire ressortir par contraste la couleur de la matière dans laquelle est réalisé le picot et qui sera visible lorsque le picot aura été brisé.

Dans une forme préférée de réalisation, le dispositif de détection 10 est réalisé sous la forme de plaques ou de bandes dans des dimensions standard, pouvant être recoupées si besoin, et comportant sur la face inférieure 111 de la base 11 destinée à être fixée sur la surface 25 de la partie sensible de la pièce 20 un adhésif adhérant par contact. En outre l'épaisseur eb et le matériau de la base 11 sont choisis de préférence pour que le dispositif de détection 10 puisse être conformé lors de son application à la géométrie de la pièce sur laquelle il est fixé.

Le dispositif de détection 10 de l'invention permet dont de détecter par simple observation visuelle qu'un choc s'est produit sur une pièce et que l'énergie de ce choc à dépasser un seuil fixé tel qu'il a pu endommager la pièce sans que cet endommagement ne soit visible par simple inspection visuelle de la pièce.

Le dispositif de détection est léger, peut être adapté à de nombreuses formes de pièce, est facile à fixer et le cas échéant à retirer. Enfin, réalisé en grande quantité dans des matériaux bon marché, son coût est minime.

## Revendications

1. Dispositif de détection (10) de chocs sur une pièce (20) **caractérisé en ce que** ledit dispositif de détection est une structure inerte comportant :
- une base (11), destinée à être fixée par une face inférieure (111) sur une surface (25) de la pièce (20) où l'occurrence d'un choc doit être détectée, et
- au moins un détecteur (12) fixé à la base (11) du côté d'une face supérieure (112) de ladite base, ledit détecteur consistant principalement en un élément de la structure du dispositif de détection (10) saillant par rapport à la dite face supérieure ;
la résistance mécanique dudit détecteur, définie par ses dimensions géométriques et par le matériau le constituant, étant déterminée de sorte que le au moins un détecteur (12) subisse une déformation rémanente d'amplitude égale ou supérieure à une amplitude seuil **As** choisie lorsque ledit détecteur est soumis au choc d'un objet d'une énergie égale ou supérieure à une énergie seuil **Es** choisie.

2. Dispositif de détection suivant la revendication 1 dans lequel un détecteur (12) est constitué d'un matériau ductile apte à être déformé de manière plastique en tout ou partie sous l'effet d'un choc d'une énergie supérieure à une valeur prédéterminée.

3. Dispositif de détection suivant la revendication 2 dans lequel l'amplitude seuil **As** est comprise entre 1mm et 5 mm.

4. Dispositif de détection suivant l'une des revendications précédentes dans lequel un détecteur (12) est constitué d'un matériau fragile , ledit détecteur étant apte à être déformé à rupture en tout ou partie lorsqu'il est impacté sous l'effet d'un choc d'une énergie supérieure à une valeur prédéterminée.

5. Dispositif de détection suivant l'une des revendications précédentes dans lequel un détecteur (12) a la forme d'un voile sensiblement perpendiculaire à la face supérieure (112) de la base (11) d'une hauteur **hd** et d'une épaisseur **ed** petites par rapport à une longueur parallèle à la dite face supérieure.

6. Dispositif de détection suivant l'une des revendications précédentes dans lequel un détecteur (12) a une forme de picot d'une hauteur **hd.**

7. Dispositif de détection suivant l'une des revendications précédentes dans lequel la base (11) comporte des évidements (16) en dehors de zones de fixation de détecteurs (12).

8. Dispositif de détection suivant l'une des revendications précédentes dans lequel un détecteur (12) est en matériau métallique.

9. Dispositif de détection suivant l'une des revendications précédentes dans lequel un détecteur (12) est en matériau polymère.

10. Dispositif de détection suivant l'une des revendications précédentes dans lequel la face inférieure (111) comporte un adhésif de fixation.

11. Dispositif de détection suivant l'une des revendications précédentes comportant une pluralité de détecteurs (12) répartis sur la base (11), des distances **d** entre détecteurs étant choisies en fonction d'une dimension caractéristique minimale d'un objet impactant devant être détecté.

12. Dispositif de détection suivant l'une des revendications précédentes dans lequel la base (11) est formée dans un matériau ductile apte à être déformé pour épouser la forme de la surface dite sensible (25) d'une pièce (20) sur laquelle il est destiné à être fixé.

13. Dispositif de détection suivant l'une des revendications précédentes dans lequel des faces des détecteurs (12) et ou de la face supérieure (112) de la base (11) sont teintées pour augmenter le contraste visuel entre les détecteurs et la base ou entre des faces différentes d'un détecteur.

14. Dispositif de détection suivant l'une des revendications précédentes dans lequel la base (11) est réalisée dans un matériau et avec une épaisseur **eb** déterminés pour que le dispositif de détection assure une protection mécanique de la pièce (20) sur laquelle il est destiné à être fixé vis à vis de chocs d'énergie inférieure à l'énergie seuil **Es.**

15. Pièce (20) comportant sur tout ou partie d'une surface de ladite pièce un dispositif de détection (10) conforme à l'une des revendications 1 à 14.

## Patentansprüche

1. Vorrichtung (10) zur Erfassung von Stößen auf ein Bauteil (20), **dadurch gekennzeichnet, dass** die Erfassungsvorrichtung eine inerte Struktur ist, die aufweist:
- eine Grundplatte (11), dazu bestimmt, durch eine Unterseite (111) an einer Fläche (25) des Bauteils (20) befestigt zu werden, wo das Auftreten eines Stoßes erfasst werden soll, und
- mindestens einen Detektor (12), der an der Grundplatte (11) auf der Seite einer Oberseite (112) der Grundplatte befestigt ist, wobei der Detektor hauptsächlich aus einem Element der Struktur der Erfassungsvorrichtung (10) besteht, das bezüglich der Oberseite vorsteht;
wobei die mechanische Festigkeit des Detektors, definiert durch seine geometrischen Abmessungen und durch das ihn bildende Material, so bestimmt wird, dass der mindestens eine Detektor (12) eine bleibende Verformung einer Amplitude gleich einer oder größer als eine gewählte Schwellenamplitude As erfährt, wenn der Detektor dem Stoß eines Gegenstands mit einer Energie ausgesetzt wird, die gleich einer oder größer als eine gewählte Schwellenenergie Es ist.

2. Erfassungsvorrichtung nach Anspruch 1, wobei ein Detektor (12) aus einem formbaren Material besteht, das unter der Einwirkung eines Stoßes einer größeren Energie als ein vorbestimmter Wert ganz oder teilweise plastisch verformt werden kann.

3. Erfassungsvorrichtung nach Anspruch 2, wobei die Schwellenamplitude As zwischen 1 mm und 5 mm liegt.

4. Erfassungsvorrichtung nach einem der vorhergehenden Ansprüche, wobei ein Detektor (12) aus einem spröden Material besteht, wobei der Detektor ganz oder teilweise bis zum Bruch verformt werden kann, wenn er unter der Wirkung eines Stoßes die Auswirkung einer Energie größer als ein vorbestimmter Wert erfährt.

5. Erfassungsvorrichtung nach einem der vorhergehenden Ansprüche, wobei ein Detektor (12) die Form einer Verwindung im Wesentlichen lotrecht zur Oberseite (112) der Grundplatte (11) mit einer Höhe hd und einer Dicke ed hat, die bezüglich einer Länge parallel zur Oberseite klein sind.

6. Erfassungsvorrichtung nach einem der vorhergehenden Ansprüche, wobei ein Detektor (12) die Form eines Zapfens einer Höhe hd hat.

7. Erfassungsvorrichtung nach einem der vorhergehenden Ansprüche, wobei die Grundplatte (11) Aussparungen (16) außerhalb von Befestigungszonen von Detektoren (12) aufweist.

8. Erfassungsvorrichtung nach einem der vorhergehenden Ansprüche, wobei ein Detektor (12) aus metallischem Material ist.

9. Erfassungsvorrichtung nach einem der vorhergehenden Ansprüche, wobei ein Detektor (12) aus Polymermaterial ist.

10. Erfassungsvorrichtung nach einem der vorhergehenden Ansprüche, wobei die Unterseite (111) einen Befestigungskleber aufweist.

11. Erfassungsvorrichtung nach einem der vorhergehenden Ansprüche, die eine Vielzahl von auf der Grundplatte (11) verteilten Detektoren (12) aufweist, wobei Abstände d zwischen Detektoren abhängig von einer minimalen charakteristischen Abmessung eines aufprallenden Gegenstands gewählt werden, der erfasst werden soll.

12. Erfassungsvorrichtung nach einem der vorhergehenden Ansprüche, wobei die Grundplatte (11) aus einem dehnbaren Material gebildet wird, das verformt werden kann, um sich an die Form der so genannten empfindlichen Fläche (25) eines Bauteils (20) anzupassen, an der sie befestigt werden soll.

13. Erfassungsvorrichtung nach einem der vorhergehenden Ansprüche, wobei Seiten der Detektoren (12) und/oder die Oberseite (112) der Grundplatte (11) gefärbt sind, um den visuellen Kontrast zwischen den Detektoren und der Grundplatte oder zwischen verschiedenen Seiten eines Detektors zu erhöhen.

14. Erfassungsvorrichtung nach einem der vorhergehenden Ansprüche, wobei die Grundplatte (11) aus einem bestimmten Material und mit einer bestimmten Dicke eb hergestellt wird, damit die Erfassungsvorrichtung einen mechanischen Schutz des Bauteils (20), an dem sie befestigt werden soll, gegenüber von Stößen einer Energie geringer als die Schwellenenergie Es gewährleistet.

15. Bauteil (20), das über eine ganze oder einen Teil einer Fläche des Bauteils eine Erfassungsvorrichtung (10) nach einem der Ansprüche 1 bis 14 aufweist.

## Claims

1. Device for detecting (10) impacts on a part (20), **characterized in that** said detection device is an inert structure comprising:
- a base (11), intended to be fixed by a bottom face (111) onto a surface (25) of the part (20) where the occurrence of an impact must be detected, and
- at least one detector (12) fixed to the base (11) on the side of a top face (112) of said base, said detector consisting primarily of an element of the structure of the detection device (10) protruding relative to said top face;
the mechanical strength of said detector, defined by its geometrical dimensions and by the constituent material thereof, being determined such that the at least one detector (12) undergoes a residual deformation of amplitude equal to or greater than a chosen threshold amplitude **As** when said detector is subjected to an impact by an object with an energy equal to or greater than a chosen threshold energy **Es.**

2. Detection device according to Claim 1, wherein a detector (12) consists of a ductile material capable of being plastically deformed wholly or partly under the effect of an impact with an energy greater than a predetermined value.

3. Detection device according to Claim 2, wherein the threshold amplitude **As** lies between 1 mm and 5 mm.

4. Detection device according to one of the preceding claims, wherein a detector (12) is made of a brittle material, said detector being capable of being deformed to break wholly or partly when it is impacted under the effect of an impact with an energy greater than a predetermined value.

5. Detection device according to one of the preceding claims, wherein a detector (12) has the form of a sail substantially at right angles to the top face (112) of the base (11) with a height **hd** and a thickness **ed** that are small relative to a length parallel to said top face.

6. Detection device according to one of the preceding claims, wherein a detector (12) has the form of a post with a height **hd.**

7. Detection device according to one of the preceding claims, wherein the base (11) comprises voids (16) outside of detector fixing zones (12).

8. Detection device according to one of the preceding claims, wherein a detector (12) is of metal material.

9. Detection device according to one of the preceding claims, wherein a detector (12) is of polymer material.

10. Detection device according to one of the preceding claims, wherein the bottom face (111) comprises a fixing adhesive.

11. Detection device according to one of the preceding claims, comprising a plurality of detectors (12) distributed over the base (11), distances **d** between detectors being chosen as a function of a minimum characteristic dimension of an impacting object that must be detected.

12. Detection device according to one of the preceding claims, wherein the base (11) is formed in a ductile material capable of being deformed to closely follow the form of the so-called sensitive surface (25) of a part (20) onto which it is intended to be fixed.

13. Detection device according to one of the preceding claims, wherein faces of the detectors (12) and/or of the top face (112) of the base (11) are tinted to increase the visual contrast between the detectors and the base or between different faces of a detector.

14. Detection device according to one of the preceding claims, wherein the base (11) is produced in a material and with a thickness **eb** that are determined for the detection device to ensure a mechanical protection of the part (20) onto which it is intended to be fixed with respect to impacts of energy less than the threshold energy **Es.**

15. Part (20) comprising, over all or part of a surface of said part a detection device (10) conforming to one of Claims 1 to 14.
